# FASCICULE DE BREVET EUROPEEN

(11) **EP 2 368 140 B1**
(45) Date de publication et mention de la délivrance du brevet: **25.02.2015**
(21) Numéro de dépôt: 09768086.2
(22) Date de dépôt: 14.12.2009
(51) Int. Cl.: G01T 3/00, G01T 1/29

(54) **PROCEDE DE DETERMINATION DE DISTRIBUTION SPECTRALE ET SPATIALE DE PHOTONS DE FREINAGE ET DISPOSITIF ASSOCIE**
VERFAHREN ZUR BESTIMMUNG DER SPEKTRALEN UND RÄUMLICHEN VERTEILUNG VON BREMSPHOTONEN UND DIESBEZÜGLICHE EINRICHTUNG
METHOD FOR DETERMINING THE SPECTRAL AND SPATIAL DISTRIBUTION OF BRAKING PHOTONS, AND RELATED DEVICE

(30) Priorité: 16.12.2008 FR 0858641
(43) Date de publication de la demande: 28.09.2011
(73) Titulaire: Commissariat à l'Énergie Atomique et aux Énergies Alternatives, 75015 Paris (FR)
(72) Inventeur: LYOUSSI, Abdallah, 04860 Pierrevert (FR); PAYAN, Emmanuel, F-13640 La Roque-d'Antheron (FR); MARIANI, Alain, F-83560 Vinon sur Verdon (FR)
(74) Mandataire: Ilgart, Jean-Christophe
(86) Numéro de dépôt international: PCT/EP2009/067048
(87) Numéro de publication internationale: WO 2010/069909

(56) Documents cités:
- FR-A- 2 764 383
- FR-A- 2 871 896
- JALLU F ET AL: "Photoneutron production in tungsten, praseodymium, copper and beryllium by using high energy electron linear accelerator" NUCLEAR INSTRUMENTS & METHODS IN PHYSICS RESEARCH, SECTION B (BEAM INTERACTIONS WITH MATERIALS AND ATOMS) ELSEVIER NETHERLANDS, [Online] vol. 155, no. 4, 1 septembre 1999 (1999-09-01), pages 373-381, XP002548244 ISSN: 0168-583X
- JALLU F ET AL: "Fissile and non-fissile element separation in concrete radioactive waste drums using the SIMPHONIE method" NUCLEAR INSTRUMENTS & METHODS IN PHYSICS RESEARCH, SECTION - B:BEAM INTERACTIONS WITH MATERIALS AND ATOMS, ELSEVIER, AMSTERDAM, NL, vol. 179, no. 2, 1 juillet 2001 (2001-07-01), pages 267-278, XP004245311 ISSN: 0168-583X

## Description

### Domaine technique et art antérieur

L'invention concerne un procédé de détermination de distribution spectrale et spatiale de photons de freinage et le dispositif associé.

L'invention s'applique, par exemple, dans le domaine de la radiographie, de l'imagerie médicale, de la tomographie, de la caractérisation non destructive d'objets radioactifs, du contrôle de matières illicites, de la production de flux de neutrons d'intensités élevées, etc..

La production de neutrons au moyen d'un accélérateur d'électrons est une technique connue qui permet d'atteindre des flux de neutrons élevés. La production de neutrons à partir d'électrons s'effectue via un faisceau de photons : les électrons issus de l'accélérateur sont dirigés vers une première cible, dite cible de freinage, qui émet des photons et les photons ainsi émis sont alors dirigés vers une deuxième cible, dite cible de conversion, qui émet les neutrons.

Dans le cadre des techniques de mesures utilisant de tels accélérateurs d'électrons, il est nécessaire d'avoir une bonne connaissance de la distribution spectrale et spatiale des photons émis ainsi que du comportement de l'ensemble formé du détecteur et de l'électronique d'acquisition.

Le procédé de l'invention répond à ce besoin.

JALLU F ET AL: "Fissile and non-fissile element séparation in concrete radioactive waste drums using the SIMPHONIE method",NUCLEAR INSTRUMENTS & METHODS IN PHYSICS RESEARCH, SECTION - B:BEAM INTERACTIONS WITH MATERIALS AND ATOMS, ELSEVIER, AMSTERDAM, NL, vol. 179, no. 2, 1 juillet 2001, pages 267-278, décrit un dispositif pour produire des photoneutrons au moyen d'un accélérateur d'électron avec différents cibles de freinage et une cible de béryllium pour créer des photoneutrons.

### Exposé de l'invention

En effet, l'invention concerne un procédé de détermination de distribution spectrale et spatiale, selon au moins un axe, d'un flux de photons de freinage qui résultent de l'interaction d'impulsions d'électrons sur une cible de freinage, caractérisé en ce que le procédé comprend :
- en un premier point de l'axe, une première mesure de neutrons qui résulte d'une intégration de signaux de détection et de comptage de neutrons, chaque signal de détection et de comptage de neutrons résultant de l'impact de photons de freinage sur une première cible de conversion centrée en ledit premier point, la première cible de conversion étant sensible à des photons d'énergie sensiblement supérieure à un premier seuil d'énergie, les neutrons qui participent à la formation d'un signal de détection et de comptage étant détectés et comptés sur une plage temporelle comprise entre deux impulsions successives d'électrons,
- des déplacements successifs de la première cible de conversion en différents points de l'axe, une mesure de neutrons conforme à la mesure de neutrons effectuée en le premier point de l'axe étant effectuée en chacun des différents points de l'axe, et
   - une succession de mesures de neutrons conformes aux mesures effectuées en ledit premier point et lesdits différents points, à l'aide d'une succession de différentes cibles de conversion associées à des seuils d'énergie différents entre eux et différents du premier seuil d'énergie.

L'invention concerne également un dispositif de détermination de distribution spectrale et spatiale, selon au moins un axe, d'un flux de photons de freinage qui résultent de l'interaction d'impulsions d'électrons sur une cible de freinage, caractérisé en ce qu'il comprend :
- un ensemble de conversion et de détection de neutrons constitué d'au moins deux cibles de conversion aptes, chacune, à générer des neutrons induits sous l'action de photons de freinage, chaque cible de conversion étant sensible à des photons d'énergie sensiblement supérieure à un seuil d'énergie différent d'une cible de conversion à l'autre, et d'un bloc de mesure qui comprend un ou plusieurs détecteurs à Hélium ³He pour détecter et compter les neutrons induits générés par chaque cible de conversion, les détecteurs à Hélium ³He étant contenus dans un ralentisseur de neutrons, le ralentisseur de neutrons étant enveloppé dans un absorbant de neutrons thermiques, chaque cible de conversion étant positionnée, successivement, sur une face de l'absorbant de neutrons thermiques qui fait face à la cible de freinage,
- un circuit électronique de traitement qui traite les signaux délivrés par l'ensemble de conversion et de détection de neutrons, le circuit électronique de traitement comprenant des moyens pour commander la détection et le comptage des neutrons sur des plages temporelles comprises entre deux impulsions d'électrons successives, et
- des moyens pour déplacer l'ensemble de conversion et de détection de neutrons selon l'axe.

Un avantage du procédé de l'invention est de donner la possibilité de connaître et de vérifier, en ligne, le bon fonctionnement et la non dérive de l'accélérateur d'électrons. La mesure des neutrons permet avantageusement d'avoir une connaissance de la stabilité du faisceau de photons au moins sous son aspect intégral, c'est-à-dire son intensité et son énergie (i.e. sa puissance).

Le procédé de l'invention permet également, de façon avantageuse, d'accéder aux caractéristiques de la composante photonique à l'aide de la mesure d'une composante neutronique induite (gain en contraste).

La bonne caractérisation spatiale du flux de photons obtenue par le procédé de l'invention permet également d'optimiser la cible de conversion destinée à produire les neutrons.

Par ailleurs, il est connu que l'interrogation directe, à l'aide d'un faisceau de photons de freinage, d'un matériau à caractériser présente un grand intérêt. La bonne caractérisation des faisceaux de photons de freinage que permet le procédé de l'invention permet avantageusement l'obtention de meilleurs résultats pour la caractérisation des matériaux. Cela permet, notamment, d'optimiser les performances et de réduire la durée des mesures et, en conséquence, de réduire les coûts.

### Brève description des figures

D'autres caractéristiques et avantages de l'invention apparaîtront à la lecture d'un mode de réalisation préférentiel fait en référence aux figures jointes parmi lesquelles :
- la figure 1 représente un dispositif pour la mise en oeuvre du procédé de l'invention ;
- la figure 2 représente une vue en perspective d'un bloc de mesure neutronique utilisé dans le dispositif de l'invention représenté en figure 1 ;
- la figure 3 représente un exemple de banc de déplacement utilisé pour la mise en oeuvre du procédé de l'invention ;
- la figure 4 représente un exemple de distribution spectrale et spatiale de photons de freinage obtenue par le procédé de l'invention ; et
- la figure 5 représente, pour différentes énergies de rayonnement de photons de freinage, un rapport R formé, pour différentes valeurs normalisées du signal mesuré, par le procédé de l'invention.

Sur toutes les figures, les mêmes références représentent les mêmes éléments.

### Description détaillée du mode de réalisation préférentiel de l'invention

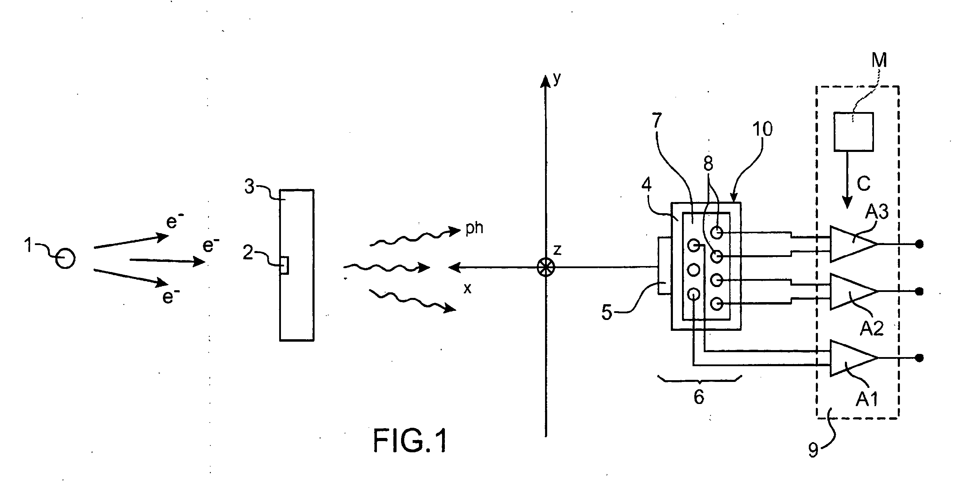

La figure 1 représente un dispositif pour la mise en oeuvre du procédé de l'invention.

Le dispositif comprend des moyens pour créer des photons de freinage et des moyens pour mesurer, selon au moins un axe de l'espace, la distribution spectrale et spatiale des photons de freinage ainsi créés.

Les moyens pour créer des photons de freinage sont constitués d'un accélérateur d'électrons 1 et d'une cible de freinage 2 placée dans un porte-cible 3. L'accélérateur 1 émet les électrons e⁻ sous forme d'impulsions. La fréquence des impulsions est comprise, par exemple, entre 10Hz et 300Hz et la largeur des impulsions est, par exemple, égale à 4,5µs. Les électrons ont une énergie égale, par exemple à 6MeV, 9MeV ou 11MeV. En interférant avec la cible de freinage 2, par exemple une cible de tungstène, les électrons produisent des photons de freinage ph.

Les moyens pour mesurer la distribution spectrale et spatiale du faisceau de photons sont constitués d'un ensemble de conversion et de détection de neutrons 6 et d'un circuit électronique de traitement 9. L'ensemble de conversion et de détection de neutrons 6 comprend au moins deux cibles de conversion 5 et un bloc de mesure 10, les cibles de conversion étant placées, l'une après l'autre, sur le bloc de mesure 10. Chaque cible de conversion est apte à générer des neutrons induits au-delà d'un certain seuil d'énergie du faisceau de photons ph, le seuil d'énergie associé à une cible étant différent d'une cible à l'autre. Le bloc de mesure 10 mesure les neutrons induits générés par chaque cible de conversion 5. Le bloc de mesure 10 est constitué de un ou plusieurs détecteur(s) à Hélium ³He 8 contenu(s) dans un ralentisseur de neutrons 7, lui-même enveloppé dans un absorbant 4 qui absorbe les neutrons thermiques (neutrons de très basse énergie). Le bloc détecteur ainsi conçu n'est alors sensible qu'aux neutrons rapides et n'est, de ce fait, que très peu affecté par l'environnement et les effets modérateurs de celui-ci sur les neutrons.

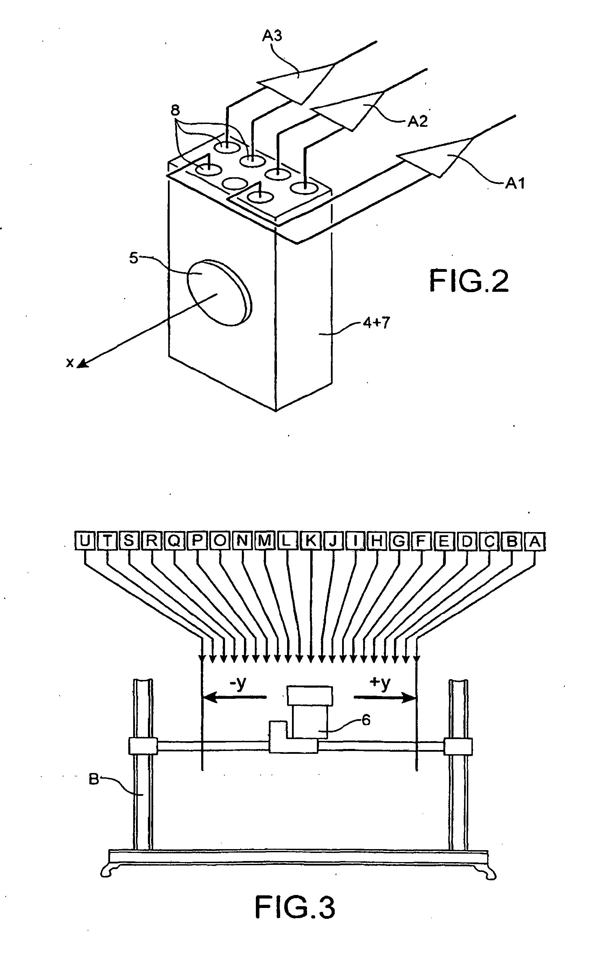

La cible de conversion 5 est placée sur une face de l'absorbant 4 qui fait face à la cible de freinage 2. Comme cela est illustré en figure 2, la cible de conversion 5 est positionnée de façon centrée sur la face de l'absorbant 4 afin d'optimiser la détection des photons ph. La normale à la surface de la face 4 au point central de la cible de conversion 5 définit un axe x. Selon le mode de réalisation préférentiel de l'invention, les détecteurs à Hélium 8 sont regroupés deux par deux et forment trois voies de mesure, une voie avant et deux voies arrière. Le circuit électronique de traitement 9 est un circuit d'électronique rapide qui comprend, pour chaque voie de mesure i (i=1, 2, 3), un amplificateur de type ADSF Aᵢ (i=1, 2, 3)(ADSF pour « Amplificateur Discriminateur Seuil Fenêtre »).

. Les mesures neutroniques sont effectuées dans des intervalles de temps qui permettent de s'affranchir des photons de freinage émis durant les impulsions électroniques. De façon préférentielle, ces intervalles de temps sont également choisis afin de laisser assez de temps aux détecteurs neutroniques et aux circuits électroniques de traitement pour que ces détecteurs et ces circuits recouvrent toutes leurs propriétés de détection.

En effet, les photons de freinage sont produits quasi-instantanément lors de l'interaction des électrons avec la cible de freinage 2. Des photons de freinage sont ainsi émis avec la même distribution temporelle que les électrons, à savoir la même largeur d'impulsion et la même fréquence de répétition. Ces photons de freinage sont donc présents durant toute la largeur des impulsions électroniques qui varie, typiquement, de quelques microsecondes à quelques dizaines de microsecondes. Durant les impulsions électroniques, les détecteurs de neutrons sont complètement aveuglés par les impulsions photoniques qui en résultent et sont, en conséquence, inopérants. Ce n'est que quelques dizaines de microsecondes après l'arrêt d'une impulsion photonique que les détecteurs de neutrons recouvrent toutes leurs propriétés. La mesure de la composante photoneutronique induite ne se fait donc qu'entre les impulsions photoniques et, préférentiellement, dans des plages de temps adaptées pour que aussi bien les détecteurs de neutrons que l'électronique de traitement aient recouvré leurs propriétés de détection. A cette fin, le circuit électronique de traitement 9 comprend des moyens de commande M qui délivrent une commande C qui, appliquée aux circuits électroniques de détection, inhibe la détection et le comptage des neutrons en dehors de ces plages de temps. A une position donnée de l'ensemble de conversion et de détection de neutrons 6, un cycle de mesures est constitué par l'intégration d'une succession de signaux de détection et de comptage de neutrons mesurés entre les impulsions d'électrons successives.

A titre d'exemple non limitatif, les mesures sont réalisées pour une fréquence des impulsions d'électrons égale à 90Hz, 5400 cycles de mesures sont effectuées et le temps d'acquisition par canal de mesure est égal à 10µs.

Des moyens permettent de déplacer l'ensemble de conversion et de détection de neutrons 6 selon au moins un axe de l'espace. Le déplacement s'effectue, par exemple, selon au moins une parmi les trois directions perpendiculaires de l'espace défini par le trièdre direct (x, y, z), l'axe x étant l'axe défini précédemment. La figure 3 représente, à titre d'exemple, un banc de déplacement B commandé à distance qui déplace l'ensemble de conversion et de détection de neutrons 6 selon l'axe y par pas de 50mm entre une première position extrême A située à -500mm par rapport à une position centrale d'abscisse y=0 et une deuxième position extrême U située à +500mm par rapport à la position centrale.

La cible de conversion 5 est constituée d'un matériau apte à générer des neutrons induits au-delà d'un certain seuil d'énergie du faisceau de photons ph et, en conséquence, au-delà d'un certain seuil d'énergie des électrons e⁻. Ainsi, différentes cibles adaptées à différents seuils d'énergie des électrons sont-elles successivement choisies pour mettre en oeuvre le procédé de l'invention, conduisant alors à déterminer la distribution du flux de photons sur une large gamme d'énergie. La cible 5 peut être, par exemple, une cible d'uranium ²³⁸U.pour les énergies d'électrons supérieures à 6 Mev et une cible de Béryllium Be pour les énergies d'électrons supérieures à 1,67 Mev.

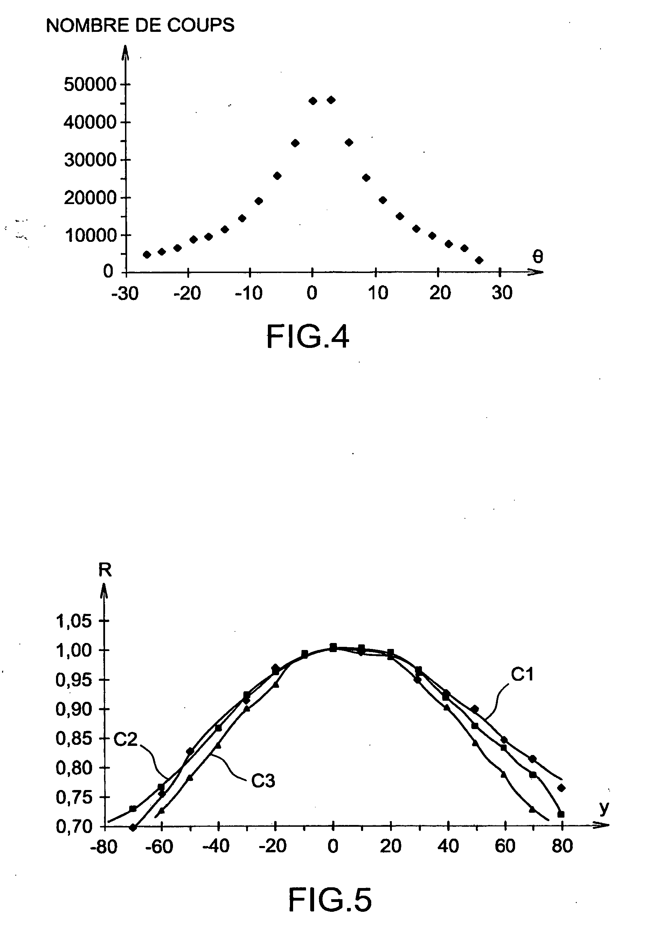

La figure 4 représente un exemple de distribution spectrale et spatiale obtenue par le procédé de l'invention. Un détecteur à Hélium ³H muni d'une cible de conversion en uranium ²³⁸U est déplacé devant la cible de freinage selon l'axe y, celui-ci étant sensiblement distant de 1m de la cible de freinage 2. Le déplacement de la cible est effectué entre les cotes -500mm et +500mm, par pas de 50mm (voir figure 3). La cible est constituée d'une pastille d'uranium de forme circulaire dont le rayon est sensiblement égal à 50mm et l'épaisseur sensiblement égale à 3mm. L'énergie des électrons est sensiblement égale à 9 MeV. La figure 4 représente le nombre de coups détectés par le détecteur à Hélium en fonction de l'angle θ d'ouverture du faisceau (angle entre l'axe x et l'axe défini par la cible de freinage 2 et la cible 5).

La figure 5 représente, pour différentes énergies des électrons, un rapport R formé par les différentes valeurs normalisées du signal mesuré par le procédé de l'invention, en fonction du déplacement de la cible de mesure. A une position donnée du dispositif de mesure, le rapport R est égal à la valeur du signal mesuré à la position donnée divisée par la valeur de signal maximale mesurée sur l'ensemble des positions. Le déplacement de la cible de mesure est effectué selon l'axe y, celui-ci étant sensiblement distant de 1 mètre de la cible de freinage 2. Le déplacement de la cible est effectué entre les cotes -80mm et +80mm, par pas de 10mm. Les courbes C1, C2 et C3 correspondent, respectivement, à une énergie des électrons égale à 6 MeV, 9 MeV et 11 MeV. Le profil obtenu est remarquablement régulier à toutes les énergies.

Les résultats représentés sur les figures 4 et 5 concernent le cas où la cible de mesure 5 est une cible d'Uranium ²³⁸U. Comme cela a déjà été mentionné précédemment, une telle cible est préférentiellement utilisée pour des énergies d'électrons supérieures ou égale à 6 MeV qui est l'énergie seuil de l'isotope ²³⁸U. Pour des valeurs d'énergie inférieures à 6 MeV, d'autres cibles sont utilisées, par exemple des cibles de Béryllium Be.

Le signal neutronique mesuré qui résulte de l'interaction des photons avec la cible de conversion est noyé dans un signal neutronique inhérent au fonctionnement de l'accélérateur. Il est donc souhaitable d'effectuer un comptage des neutrons en l'absence de cible afin de mesurer le bruit que représente le signal neutronique de fonctionnement de l'accélérateur, ce bruit étant ensuite soustrait du signal utile. A cette fin, le circuit électronique de traitement qui est relié au bloc de mesure 6 comprend des circuits aptes à mémoriser les mesures effectuées et à calculer la différence entre les signaux mesurés respectivement en présence et en absence de cible de conversion.

## Revendications

1. Procédé de détermination de distribution spectrale et spatiale, selon au moins un axe, d'un flux de photons de freinage qui résultent de l'interaction d'impulsions d'électrons sur une cible de freinage (2), le procédé comprenant :
- en un premier point de l'axe, une première mesure de neutrons qui résulte d'une intégration de signaux de détection et de comptage de neutrons, chaque signal de détection et de comptage de neutrons résultant de l'impact de photons de freinage (ph) sur une première cible de conversion (5) centrée en ledit premier point, la première cible de conversion étant sensible à des photons d'énergie sensiblement supérieure à un premier seuil d'énergie, les neutrons qui participent à la formation d'un signal de détection et de comptage étant détectés et comptés sur une plage temporelle comprise entre deux impulsions successives d'électrons, et
- des déplacements successifs de la première cible de conversion (5) en différents points de l'axe, une mesure de neutrons conforme à la mesure de neutrons effectuée en le premier point de l'axe étant effectuée en chacun des différents points de l'axe, **caractérisé en ce qu'**il comprend, en outre :
- une succession de mesures de neutrons conformes aux mesures effectuées en ledit premier point et lesdits différents points, à l'aide d'une succession de différentes cibles de conversion associées à des seuil d'énergie différents entre eux et différents du premier seuil d'énergie.

2. Procédé selon la revendication 1, dans lequel la première cible de conversion est une cible de Béryllium ayant un premier seuil d'énergie et une deuxième cible de conversion est une cible d'Uranium ²³⁸U ayant un deuxième seuil d'énergie de valeur supérieure à la valeur du premier seuil.

3. Procédé selon l'une quelconque des revendications précédentes, dans lequel un signal neutronique inhérent au fonctionnement d'un accélérateur d'électrons (1) qui crée les photons de freinage par interaction des électrons avec la cible de freinage (2) est mesuré, en l'absence de cible de conversion, sur la plage temporelle et en chaque point de l'axe et la mesure du signal neutronique inhérent au fonctionnement de l'accélérateur d'électrons est soustraite du signal de détection et de comptage de neutrons mesuré en présence de la cible de conversion.

4. Procédé selon l'une quelconque des revendications précédentes, dans lequel les signaux de détection et de comptage sont mesurés par un bloc détecteur à Hélium ³He.

5. Dispositif de détermination de distribution spectrale et spatiale, selon au moins un axe, d'un flux de photons de freinage qui résultent de l'interaction d'impulsions d'électrons sur une cible de freinage (2), **caractérisé en ce qu'**il comprend :
- un ensemble de conversion et de détection de neutrons (6) constitué d'au moins deux cibles de conversion (5) aptes, chacune, à générer des neutrons induits sous l'action de photons de freinage, chaque cible de conversion (5) étant sensible à des photons d'énergie sensiblement supérieure à un seuil d'énergie différent d'une cible de conversion à l'autre, et d'un bloc de mesure (10) qui comprend un ou plusieurs détecteurs à Hélium ³He (8) pour détecter et compter les neutrons induits générés par chaque cible de conversion, les détecteurs à Hélium ³He (8) étant contenus dans un ralentisseur de neutrons (7), le ralentisseur de neutrons (7) étant enveloppé dans un absorbant de neutrons thermiques (4), chaque cible de conversion (5) étant positionnée, successivement, sur une face de l'absorbant de neutrons thermiques (4) qui fait face à la cible de freinage (2),
- un circuit électronique de traitement (9) qui traite les signaux délivrés par l'ensemble de conversion et de détection de neutrons (6), le circuit électronique de traitement (9) comprenant des moyens pour commander la détection et le comptage des neutrons sur des plages temporelles comprises entre deux impulsions d'électrons successives, et
- des moyens (B) pour déplacer l'ensemble de conversion et de détection de neutrons (6) selon l'axe.

6. Dispositif selon la revendication 5, dans lequel les moyens (B) pour déplacer l'ensemble de conversion et de détection de neutrons (6) selon l'axe sont constitués par un banc de déplacement(B) commandé à distance.

7. Dispositif selon l'une des revendications 5 ou 6, dans lequel une première cible de conversion est une cible de Béryllium ayant un premier seuil d'énergie et une deuxième cible de conversion est une cible d'Uranium ²³⁸U ayant un deuxième seuil d'énergie supérieur au premier seuil.

## Patentansprüche

1. Verfahren zum Bestimmen der spektralen und räumlichen Verteilung eines Stroms von Bremsphotonen in zumindest einer Achse, die sich aus der Wechselwirkung von Impulsen von Elektronen auf ein Bremstarget (2) ergeben, wobei das Verfahren umfasst:
- an einem ersten Punkt der Achse eine erste Neutronenmessung, die sich aus einer Integration von Signalen zum Erfassen und Zählen von Neutronen ergibt, wobei jedes Signal zum Erfassen und Zählen von Neutronen aus dem Aufprall der Bremsphotonen (ph) auf ein erstes Konversionstarget (5) resultiert, das auf dem ersten Punkt zentriert ist, wobei das erste Konversionstarget gegenüber Photonen empfindlich ist, deren Energie wesentlich größer als ein erster Energieschwellwert ist, wobei die Neutronen, die an der Bildung eines Erfassungs- und Zählsignals teilhaben, über einen Zeitbereich erfasst und gezählt werden, der zwischen zwei aufeinanderfolgenden Impulsen von Elektronen liegt, und
- aufeinanderfolgende Verlagerungen des ersten Konversionstargets (5) an verschiedene Punkte der Achse, wobei eine Neutronenmessung entsprechend der am ersten Punkt der Achse durchgeführten Neutronenmessung an jedem der verschiedenen Punkte der Achse durchgeführt wird,
**dadurch gekennzeichnet, dass** es ferner umfasst:
- eine Folge von Neutronenmessungen entsprechend den Messungen, die am ersten Punkt und an den verschiedenen Punkten erfolgen, mit Hilfe einer Folge von verschiedenen Konversionstargets, denen Energieschwellwerte zugeordnet sind, die sich voneinander und von dem ersten Energieschwellwert unterscheiden.

2. Verfahren nach Anspruch 1, wobei das erste Konversionstarget ein Target aus Beryllium mit einem ersten Energieschwellwert ist, und ein zweites Konversionstarget ein Target aus Uran²³⁸U mit einem zweiten Energieschwellwert ist, der höher als der erste Schwellwert ist.

3. Verfahren nach einem der vorangehenden Ansprüche, wobei ein Neutronensignal, das mit dem Betrieb eines Elektronenbeschleunigers (1) inhärent ist, der Bremsphotonen durch die Wechselwirkung der Elektronen mit dem Bremstarget (2) schafft, bei fehlendem Konversionstarget über den Zeitbereich und an jedem Punkt der Achse gemessen wird und die Messung des mit dem Betrieb des Elektronenbeschleunigers inhärenten Neutronensignals von dem Signal zum Erfassen und Zählen von Neutronen abgezogen wird, das bei vorhandenem Konversionstarget gemessen wird.

4. Verfahren nach einem der vorangehenden Ansprüche, wobei die Erfassungs- und Zählsignale mit einem Helium ³He-Detektorblock gemessen werden.

5. Vorrichtung zum Bestimmen der spektralen und räumlichen Verteilung eines Stroms von Bremsphotonen entlang zumindest einer Achse, die sich aus der Wechselwirkung von Impulsen von Elektronen auf ein Bremstarget (2) ergeben, **dadurch gekennzeichnet, dass** sie aufweist:
- eine Einheit zur Konversion und Detektion von Neutronen (6), die aus zumindest zwei Konversionstargets (5) besteht, die jeweils geeignet sind, unter der Wirkung von Bremsphotonen induzierte Neutronen zu erzeugen, wobei jedes Konversionstarget (5) gegenüber Photonen empfindlich ist, deren Energie wesentlich größer als ein Energieschwellwert ist, der sich von einem Konversionstarget zum anderen unterscheidet, und einen Messblock (10), der einen oder mehrere Helium ³He-Detektoren (8) aufweist, um die von jedem Konversionstarget erzeugten induzierten Neutronen zu detektieren und zu zählen, wobei die Helium ³He-Detektoren (8) in einem Neutronenverzögerer (7) enthalten sind, wobei der Neutronenverzögerer (7) in einem Absorber von thermischen Neutronen (4) umhüllt ist, wobei jedes Konversionstarget (5) nacheinander auf einer Seite des Absorbers für thermische Neutronen (4) positioniert wird, die dem Bremstarget (2) gegenüberliegt,
- einen elektronischen Verarbeitungsschaltkreis (9), der die von der Einheit zur Konversion und Detektion von Neutronen (6) ausgegebenen Signale verarbeitet, wobei der elektronische Verarbeitungsschaltkreis (9) Mittel zum Steuern der Detektion und Zählung von Neutronen über Zeitbereiche umfasst, die zwischen zwei aufeinanderfolgenden Impulsen von Elektronen liegen, und
- Mittel (B) zum Verlagern der Einheit zur Konversion und Detektion von Neutronen (6) entlang der Achse.

6. Vorrichtung nach Anspruch 5, wobei die Mittel (B) zum Verlagern der Einheit zur Konversion und Detektion von Neutronen (6) entlang der Achse aus einem ferngesteuerten Verlagerungstisch (B) bestehen.

7. Vorrichtung nach einem der Ansprüche 5 oder 6, wobei ein erstes Konversionstarget ein Target aus Beryllium mit einem ersten Energieschwellwert ist, und ein zweites Konversionstarget ein Target aus Uran ²³⁸U mit einem zweiten Energieschwellwert ist, der höher als der erste Schwellwert ist.

## Claims

1. Method for determining the spectral and spatial distribution, along at least one axis, of a braking photon flow which results from the interaction of pulses of electrons on a braking target (2), the method comprising:
- at a first point of the axis, a first neutron measurement which results from an integration of neutron detection and counting signals, each neutron detection and counting signal resulting from the impact of braking photons (ph) on a first conversion target (5) centred on said first point, the first conversion target being sensitive to photons of energy substantially greater than a first energy threshold, the neutrons that participate in the formation of a detection and counting signal being detected and counted over a time range between two successive pulses of electrons,
- successive movements of the first conversion target (5) at different points of the axis, a neutron measurement complying with the neutron measurement carried out at the first point of the axis being carried out at each of the different points of the axis, and
- a succession of neutron measurements complying with the measurements carried out at said first point and said different points, with the aid of a succession of different conversion targets associated with energy thresholds different from each other and different from the first energy threshold.

2. Method according to claim 1, wherein the first conversion target is a beryllium target having a first energy threshold and a second conversion target is a uranium ²³⁸U target having a second energy threshold of value greater than the value of the first threshold.

3. Method according to any of the preceding claims, wherein a neutron signal inherent in the operation of an electron accelerator (1) which creates braking photons by interaction of the electrons with the braking target (2) is measured, in the absence of conversion target, over the time range and at each point of the axis, and the measurement of the neutron signal inherent in the operation of the electron accelerator is subtracted from the neutron detection and counting signal measured in the presence of the conversion target.

4. Method according to any of the preceding claims, wherein the detection and counting signals are measured by a helium ³He detector unit.

5. Device for determining the spectral and spatial distribution, along at least one axis, of a braking photon flow which results from the interaction of pulses of electrons on a braking target (2), **characterised in that** it comprises:
- an assembly for conversion and detection of neutrons (6) constituted of at least two conversion targets (5) each able to generate neutrons induced under the action of braking photons, each conversion target (5) being sensitive to photons of energy substantially greater than an energy threshold different from one conversion target to the other, and from a measurement unit (10) that comprises one or more helium ³He detectors (8) to detect and count the induced neutrons generated by each conversion target, the helium ³He detectors (8) being contained in a neutron moderator (7), said neutron moderator (7) being enveloped in an absorber of thermal neutrons (4), each conversion target (5) being positioned, successively, on a face of the absorber of thermal neutrons (4) which faces the braking target (2),
- an electronic processing circuit (9) which processes the signals delivered by the neutron conversion and detection assembly (6), said electronic processing circuit (9) comprising means for controlling the detection and the counting of neutrons over time ranges between two successive pulses of electrons, and
- means (B) for moving the neutron conversion and detection assembly (6) along the axis.

6. Device according to claim 5, wherein the means (B) for moving the neutron conversion and detection assembly (6) along the axis are constituted of a remotely controlled movement unit (B).

7. Device according to one of claims 5 or 6, wherein a first conversion target is a beryllium target having a first energy threshold and a second conversion target is a uranium ²³⁸U target having a second energy threshold greater than the first threshold.
